# EUROPÄISCHE PATENTSCHRIFT

(11) **EP 2 326 853 B1**
(45) Veröffentlichungstag und Bekanntmachung des Hinweises auf die Patenterteilung: **19.06.2013**
(21) Anmeldenummer: 09807898.3
(22) Anmeldetag: 03.08.2009
(51) Int. Cl.: F16D 21/06, F16D 25/08

(54) **BETÄTIGUNGSEINRICHTUNG FÜR DOPPELKUPPLUNG**
ACTUATOR FOR A DUAL CLUTCH
DISPOSITIF D'ACTIONNEMENT POUR DOUBLE EMBRAYAGE

(30) Priorität: 22.08.2008 DE 102008039358; 18.12.2008 DE 102008063749; 18.03.2009 DE 102009013446
(43) Veröffentlichungstag der Anmeldung: 01.06.2011
(73) Patentinhaber: Schaeffler Technologies AG & Co. KG, 91074 Herzogenaurach (DE)
(72) Erfinder: ACKER, Christophe, F-67760 Gambsheim (FR); HAHN, Sibylle, 77836 Rheinmünster (DE)
(74) Vertreter: Hoferer, Andreas
(86) Internationale Anmeldenummer: PCT/DE2009/001084
(87) Internationale Veröffentlichungsnummer: WO 2010/020206

(56) Entgegenhaltungen:
- EP-A1- 0 931 951
- EP-A1- 1 830 095
- EP-A2- 1 413 795
- WO-A1-02/057647
- DE-A1- 1 505 577
- DE-A1- 19 941 837
- FR-A1- 2 851 627
- GB-A- 2 182 410

## Beschreibung

Die vorliegende Erfindung betrifft eine Betätigungseinrichtung für eine Doppelkupplung gemäß dem Oberbegriff von Anspruch 1, wobei die Doppelkupplung eine erste Teilkupplung K1 und eine zweite Teilkupplung K2 umfasst, über die eine Antriebswelle eines Antriebs mit einer ersten bzw. einer zweiten Getriebeeingangswelle eines Doppelkupplungsgetriebes verbindbar ist.

Eine solche Doppelkupplungsanordnung ist beispielsweise aus der EP 0 185 176 B1 bekannt.

Aus der DE 15 05 577 ist eine Doppelkupplungsanordnung bekannt, bei der Kolben- bzw. Zylindereinheiten zum Betätigen der Betätigungseinrichtung hintereinander angeordnet sind. Es ist hier ein gemeinsames Zylindergehäuse für beide Betätigungskolben vorgesehen.

Aus der Druckschrift DE 199 41 837 ist eine ähnliche Betätigungseinrichtung einer Doppelkupplungsanordnung bekannt, die ebenso ein gemeinsamen Gehäuse aufweist, in welchem die entsprechenden Kolben- /Zylindereinheiten der Betätigungseinrichtung angeordnet sind.

Die EP 0 931 951 offenbart eine gebaute Betätigungseinrichtung für eine Doppelkupplung, mit zwei Kolben- / Zylindereinheiten, die separate Führungsrohre aufweisen, welche an einem gemeinsamen Flansch unabhängig voneinander abgestützt sind.

Bei solchen Doppelkupplungen gibt es die Anordnung, dass beide Teilkupplungen K1 und K2 im Grundzustand offen ("normally open") sind und über zumindest eine Betätigungseinrichtung zugedrückt werden. Bei dieser Anordnung müssen die zum Zudrücken notwendigen und normalerweise abwechselnd aufgebrachten Betätigungskräfte in der gleichen Richtung aufgebracht werden. Diese Betätigungskräfte müssen dann an einem Abstützlager an der Kurbelwelle oder im Getriebe abgestützt werden. Geht man davon aus, dass die Teilkupplung K1 zunächst offen und die Teilkupplung K2 zunächst geschlossen sind, so ist die Gesamtbetätigungskraft der Anordnung gleich der Betätigungskraft der Teilkupplung K2. Wird anschließend eine Überschneidungsschaltung durchgeführt, um die Teilkupplung K1 zu schließen und die Teilkupplung K2 zu öffnen, so nimmt die Betätigungskraft der Teilkupplung K1 zu und die Betätigungskraft der Teilkupplung K2 ab. Die Gesamtbetätigungskraft bleibt aber im Wesentlichen gleich. Im Endzustand ist die Teilkupplung K1 geschlossen und die Teilkupplung K2 offen. Die Gesamtbetätigungskraft entspricht dann der Betätigungskraft der Teilkupplung 1. Die Gesamtbetätigungskraft bleibt daher bei dieser Anordnung über den gesamten Zeitraum im Wesentlichen gleich hoch.

Bei einer alternativen Ausbildung der Doppelkupplung gibt es die Anordnung, dass die Teilkupplung K1 im Grundzustand geschlossen ("normally closed") ist und über zumindest eine Betätigungseinrichtung aufgedrückt wird, und dass die Teilkupplung K2 im Grundzustand offen ("normally open") ist und über zumindest eine Betätigungseinrichtung zugedrückt wird. Es ergeben sich bei einer solchen Anordnung zwei unterschiedliche Zustände: Wenn die Teilkupplung K1 geschlossen und die Teilkupplung K2 offen sind, wird keine Betätigungskraft benötigt. Um die Teilkupplung K1 zu öffnen und die Teilkupplung K2 zu schließen, werden hingegen zwei Betätigungskräfte benötigt. In diesem Fall addieren sich die beiden Betätigungskräfte und ergeben eine hohe Axialkraft auf dem Abstützlager.

Bei LKW Anwendungen, die ein Drehmoment bis zu 3.300...3.500 Nm aufweisen können, treten Betätigungskräfte bis zu 12.400...15.000 N auf. Bei LKW Anwendungen müsste die die Kurbelwellenlagerung oder das Getriebelager entsprechend die bei den vorstehend beschriebenen Anordnungen auftretenden sehr hohen Betätigungskräfte abstützen. Ziel muß es folglich sein, die notwendigen Betätigungskräfte und insbesondere die Summe beider Betätigungskräfte zu minimieren, um eine Dimensionierung der Lagerung zu reduzieren und alle damit verbundenen Änderungen im Gehäuse zu vermeiden.

Es ist daher eine Aufgabe der vorliegenden Erfindung eine Betätigungseinrichtung für eine Doppelkupplung der Eingangs genannten Art anzugeben, bei der die Summe der notwendigen Betätigungskräfte minimiert sind, so dass auf eine verstärkte Auslegung der Lagerung sowie aller entsprechend notwendigen Änderungen verzichtet werden kann.

Diese Aufgabe wird erfindungsgemäß gelöst durch eine gattungsgemäße Betätigungseinrichtung für eine Doppelkupplung gemäß dem kennzeichnenden Merkmalen von Anspruch 1, wobei die Doppelkupplung eine erste Teilkupplung und eine zweite Teilkupplung umfasst, über die eine Antriebswelle eines Antriebes mit einer ersten bzw. zweiten Getriebeeingangswelle eines Doppelkupplungsgetriebes verbindbar ist, wobei die Betätigungseinrichtung eine erste pneumatisch oder hydraulisch betätigbare Zylindereinheit mit Zylindergehäuse und Kolben zum Ziehen eines Betätigungslagers der einen Teilkupplung aufweist, und wobei die Betätigungseinrichtung eine zweite pneumatisch oder hydraulisch betätigbare Zylindereinheit mit Zylindergehäuse und Kolben zum Drücken eines Betätigungslagers der anderen Teilkupplung aufweist.

Die erfindungsgemäße Betätigungseinrichtung ist also besonders geeignet zur Verwendung bei einer Doppelkupplung bei der die erste Teilkupplung K1 in deren unbetätigtem Zustand geschlossen ist ("normally closed") und zum Öffnen dieser ersten Teilkupplung K1 eine Zugkraft aufgebracht wird ("gezogene Kupplung") und bei der die zweite Teilkupplung K2 in deren unbetätigtem Zustand geöffnet ist ("normally open") und zum Schließen dieser zweiten Teilkupplung eine Druckkraft aufgebracht wird ("gedrückte Kupplung"), so dass die Betätigungskraft der ersten Teilkupplung K1 entgegen der Betätigungskraft der zweiten Teilkupplung K2 wirkt. Dementsprechend ergibt sich bei einer Überschneidungsschaltung der Teilkupplungen bei Gangwechsel eine quasi Aufhebung der Betätigungskraftwirkung auf die Lagerung der Doppelkupplung. Mit dieser Kupplungszuordnung, einer zugedrückten "normally open" Kupplung und eine (auf)gezogenen "normally closed" Kupplung, ist die Summe beider Betätigungskräfte, einmal gedrückt und gleichzeitig einmal gezogen, nahe zu Null,

Die eine Zugkraft erzeugende erste Zylindereinheit der vorliegenden Betätigungseinrichtung kann über eines der Betätigungslager mit der gezogenen und im Normalzustand geschlossenen Teilkupplung und die eine Druckkraft erzeugende zweite Zylindereinheit der Betätigungseinrichtung kann über das weitere Betätigungslager mit der zugedrückten und im Normalzustand offenen Teilkupplung zusammenwirken.

Erreicht wird vorliegend also, dass eine Summe der Betätigungskräfte beider Teilkupplungen der Doppelkupplung minimiert wird, wodurch eine neue Definition der Lagerung und entsprechender zugehöriger Änderungen im Gehäuse vermeidbar sind für eine Kupplungszuordnung mit einer zugedrückten, im Grundzustand offenen Kupplung und einer aufgezogenen, im Grundzustand geschlossenen Kupplung. Die vorliegende Betätigungseinrichtung ermöglicht also die Betätigung einer Doppelkupplung, bei der ein Ausrücklager gedrückt und ein zweites Ausrücklager gezogen wird.

Erfindungsgemäß sind die beiden Zylindereinheiten ineinandergeschachtelt und insbesondere auch symmetrisch zu einer Achse der Getriebeeingangswellen oder zu einer Achse der Kurbelwelle angeordnet, so dass diese bezogen auf die Achse eine innere Zylindereinheit und eine äußere Zylindereinheit bilden. Dabei kann die äußere Zylindereinheit als die eine Zugkraft erzeugende erste Zylindereinheit und die innere Zylindereinheit als die eine Druckkraft erzeugende zweite Zylindereinheit ausgebildet sein.

Die Betätigungseinrichtung weist weiterhin ein zentrales Führungsrohr auf, wobei der Kolben der inneren Zylindereinheit auf dem Führungsrohr bewegbar abgestützt ist. Weiterhin kann der Kolben der inneren Zylindereinheit auf dem zentralen Führungsrohr über vorzugsweise genau zwei Abstützstellen bewegbar abgestützt sein (wenn gleich auch eine andere Anzahl an Abstützstellen, wie nur eine Abstützstelle oder drei Abstützstellen, möglich sind). Weiterhin kann das zentrale Führungsrohr getriebeseitig, insbesondere an einem Getriebegehäuse, drehfest abgestützt sein. Außerdem kann ein Kolben der äußeren Zylindereinheit auf dem Zylindergehäuse der inneren Zylindereinheit, vorzugsweise über genau eine, insbesondere ballig ausgebildete Abstützstelle, bewegbar abgestützt sein (wenngleich auch mehrere Abstützstellen möglich sind).

Des Weiteren sind das Zylindergehäuse der inneren Zylindereinheit und das Zylindergehäuse der äußeren Zylindereinheit erfindungsgemäß an einer Rückwand der Betätigungseinrichtung befestigt, die am zentralen Führungsrohr abgestützt ist. Rückwand und Führungsrohr können dabei integral ausgebildet sein. Weiterhin kann zwischen Rückwand und Kolben der inneren Zylindereinheit eine Vorlastfeder für die innere Zylindereinheit angeordnet sein, mit der der Kolben der inneren Zylindereinheit in der Richtung eines Betätigungslagers einer Teilkupplung K2 gedrückt wird. Außerdem kann eine Druckkammer der inneren Zylindereinheit durch Kolben und Zylindergehäuse der inneren Zylinderkammer sowie durch die Rückwand gebildet sein. Dabei kann ein Druckmediumanschluss der Druckkammer der inneren Zylindereinheit über die Rückwand erfolgen. Des Weiteren kann eine Druckkammer der äußeren Zylindereinheit ausschließlich durch Kolben und Zylindergehäuse der äußeren Zylindereinheit gebildet sein. Dabei kann einer Vorlastfeder für die äußere Zylindereinheit in der Druckkammer der äußeren Zylindereinheit angeordnet sein, so dass das Betätigungslager gegen die Hebelfeder der Teilkupplung K1 gezogen werden kann. Hierbei kann ein Druckmediumanschluss der Druckkammer der äußeren Zylindereinheit über das Zylindergehäuse der äußeren Zylindereinheit erfolgen.

Außerdem kann jede der Zylindereinheiten einen Weg- oder Positionssensor aufweisen. Als Weg- oder Positionssensoren können Einheiten bestehend aus einem mittels einer Vorlastfeder am jeweiligen Kolben anliegenden Stößel, Hall-Effekt-Sensoren oder PLCD-Sensoren verwendet werden. Die Weg- oder Positionssensoren beider Zylindereinheiten können an der Rückwand angeordnet oder in den Bauraum der Betätigungseinrichtung integriert sein.

Die vorliegende Erfindung wird nachfolgend anhand bevorzugter Ausführungsbeispiele in Verbindung mit den zugehörigen Figuren näher erläutert. In diesen zeigen:
- Fig. 1: Eine schematische Darstellung des Aufbaus eines Ausführungsbeispieles einer Doppelkupplung als Halbschnitt mit einer schematischen Darstellung der vorliegenden Betätigungseinrichtung,
- Fig. 2: eine weitere schematische Darstellung des Aufbaus der Doppelkupplung mit Betätigungseinrichtung, wobei die Betätigungseinrichtung detaillierter dargestellt ist,
- Fig. 3: eine weitere schematische Darstellung der Betätigungseinrichtung nach Fig. 2,
- Fig. 4: eine weitere schematische Darstellung der Betätigungseinrichtung nach Fig. 3 und Fig. 4 als Halbschnitt mit Weg- bzw. Positionssensor für die äußere Zylindereinheit,
- Fig. 5: eine weitere schematische Darstellung der Betätigungseinrichtung nach den Fig. 2 bis 4 als Halbschnitt mit eine Weg- bzw. Positionssensor für die innere Zylindereinheit, und
- Fig. 6: eine schematische Darstellung eines weiteren Ausführungsbeispieles der Betätigungseinrichtung mit in den Bauraum der Betätigungseinrichtung integrierten Weg- bzw. Positionssensoren für die innere Zylindereinheit und die äußere Zylindereinheit.

Die vorliegenden Ausführungsbeispiele der Betätigungseinrichtung sind insbesondere für Fahrzeuge mit einer Druckluftanlage verwendbar, also beispielsweise bei Lastkraftwagen.

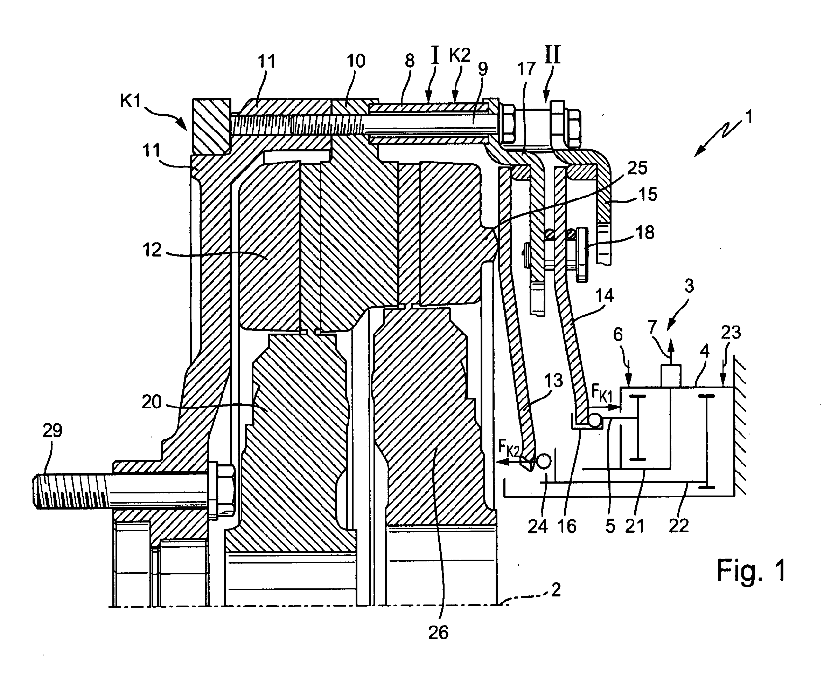

Fig. 1 zeigt schematisch den Aufbau einer Doppelkupplung mit pneumatisch betätigter Zentralausrückereinheit für beide Teilkupplungen (nachfolgend auch als "Doppel-CPCA" bezeichnet), welche bei solchen Fahrzeugen mit Druckluftanlagen einsetzbar ist.

Die Doppelkupplung ist im Antriebstrang eines Fahrzeuges zwischen einem Antrieb und einem Doppelkupplungsgetriebe angeordnet, wobei zwischen Antrieb und Doppelkupplung ein Torsionsschwingungsdämpfungselement, wie ein Zweimassenschwungrad, angeordnet sein kann.

Der Doppelkupplungsaufbau 1 umfasst eine erste Teilkupplung K1, welche im Grundzustand geschlossen ist ("normally closed"), wobei der Hebelmechanismus dieser Teilkupplung K1 derart ausgebildet ist, dass diese ersten Teilkupplung K1 mit einer Zugkraft F_{K1} beaufschlagt wird, um diese zu Öffnen, sowie eine zweite Teilkupplung K2, welche im Grundzustand offen ist ("normally open"), wobei der Hebelmechanismus dieser Teilkupplung K2 derart ausgebildet ist, dass diese zum Schließen mit einer Druckkraft F_{K2} beaufschlagt wird. Eine der Teilkupplungen K1 und K2 kann eine Verschleißnachstelleinrichtung aufweisen. Ebenso können beide Teilkupplungen K1 und K2 jeweils Verschleißnachstelleinrichtungen aufweisen.

Dieser Aufbau ist insbesondere in Fig. 1 gezeigt, wobei die Betätigungskräfte (Zugkraft F_{K1} der Teilkupplung K1 und Druckkraft F_{K2} der Teilkupplung K2) von einer bezüglich einer Rotationsachse 2 der Doppelkupplung 1 zentral angeordneten Betätigungseinrichtung 3 erzeugt wird, welches vorliegend pneumatisch beaufschlagt wird. Alternativ ist auch eine hydraulische Betätigung möglich, ohne von der Lehre der vorliegenden Erfindung abzuweichen. Eine pneumatische Betätigung hat jedoch den Vorteil der sehr viel niedrigeren Dichte von Luft, so dass auf einen bei hydraulischen Medien ggf. notwendigen Fliehkraftausgleich aufgrund der sich verändernden Masseverhältnissen bei Betätigung der Kupplung verzichtet werden kann.

Die Betätigungseinrichtung 3 umfasst eine erste Zylindereinheit ("äußere Zylindereinheit") mit einem Zylindergehäuse 4 und einem Betätigungskolben 5 und zumindest einer Druckkammer, die an ein Druckmedium 6 anschließbar ist. Der Aufbau der ersten Zylindereinheit 4 der Betätigungseinrichtung 3 ist derart, dass eine Zugkraft F_{K1} auf die Tellerfeder 14 der Teilkupplung K1 über ein Betätigungslager (Ausrücklager) 16 ausgeübt wird, d.h. das Betätigungslager 16 vermittelt diese Zugkraft F_{K1} an die Hebelfeder 14, welche am Deckel 15 abgestützt ist. Ein äußeres Ende der Hebelfeder 14 (Tellerfeder 14) ist am Deckel K1 gelagert. Ein mittlerer Bereich der Hebelfeder 14 ist am Deckel 17 der Teilkupplung 17 abgestützt. Bei Erzeugung einer Zugkraft F_{K1} in der ersten Teilbetätigungseinrichtung 4, 5 wird die Hebelfeder 14 (welche beispielsweise als Tellerfeder ausgelegt sein kann) um die Auflagerung 18 verschwenkt und die Kontaktfläche zwischen Hebelfeder 14 und Ausrücklager 16 in Fig. 1 nach rechts verschoben, wodurch der Deckel 15 (vermittels der Schraubenverbindung II) in Fig. 1 nach links verschoben wird und die Druckplatte 12 aufgrund der Wirkung der Blattfederelemente ebenfalls nach links in Fig. 1 verschoben wird, wodurch eine Klemmung der Kupplungsscheibe 20 aufgehoben wird. Die im Grundzustand geschlossene Kupplung K1 ist dann aufgrund der Zugkraft F_{K1} geöffnet.

Die Betätigungseinrichtung 3 umfasst zudem eine zweite Zylindereinheit ("innere Zylindereinheit"), welche ein Zylindergehäuse 21 und einen Kolben 22 sowie zumindest eine Druckkammer aufweist, die an ein Druckmedium anschließbar ist.

Die zweite Zylindereinheit 21 ist derart aufgebaut, dass eine Druckkraft F_{K2} erzeugt wird, welche über das Betätigungslager 24 (Einrücklager) an die Hebelfeder 13 vermittelt wird. Der äußere Bereich der Hebelfeder 13 ist am Deckel 17 der Teilkupplung K2 abgestützt, welcher über die Distanzstücke 8 der Schraubenverbindungen I an der Zentralplatte 10 abgestützt und über die Schrauben 9 der Schraubenverbindung I an der Schwungscheibe 11 befestigt ist.

Wie dargelegt ist die Betätigungseinrichtung 3 der Doppelkupplung 1 als Doppelzentraleinrücker/-ausrücker mit pneumatischer oder hydraulischer Betätigung ausgebildet. Aufgrund der gewählten Kraftrichtungen sind die Betätigungskräfte der Kupplung K1 und die Betätigungskräfte der Kupplung K2 einander entgegengesetzt, so dass keine axiale Kraft auf die Kurbelwelle übertragen wird.

Wie weiterhin dargelegt ist die Teilkupplung K1 im Grundzustand geschlossen und muss gezogen werden, um diese zu öffnen und die Teilkupplung K2 ist im Grundzustand offen und muss gedrückt werden, um sie zu schließen, wiederum so dass die Betätigungskräfte K1 und K2 einander entgegenwirken und eine axiale Kraft auf die Kurbelwelle vermieden werden kann.

Die vorstehende Beschreibung offenbart unter anderem, dass die beiden Betätigungskräfte einer Doppelkupplung, einmal die Betätigungskraft der zugedrückten "normally open" Kupplung und einmal die Betätigungskraft der gezogenen "normally dosed" Kupplung, sich ausgleichen, so dass die Summe den beiden Betätigungskräfte nahezu Null ist, und eine Überdimensionierung des Kurbelwellelagers oder des Getriebelagers nicht erforderlich ist.

Insbesondere offenbart die vorstehende Beschreibung, dass die Teilkupplung K1 im Grundzustand geschlossen ("Normally Closed") ausgebildet ist und zum Öffnen eine Zugkraft aufgebracht wird ("gezogen"), und dass gleichzeitig die Teilkupplung K2 im Grundzustand offen ("Normally Open") ausgebildet ist und zum Schließen eine Druckkraft aufgebracht wird ("zugedrückt").

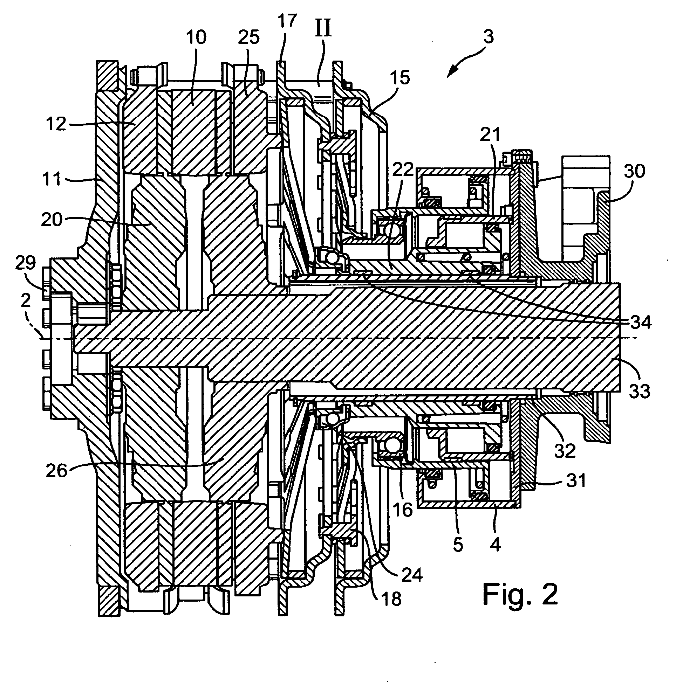

In Fig. 2 ist der schematisch skizzierte Aufbau der Betätigungseinrichtung 3 für ein erstes Ausführungsbeispiel präzisiert.

So zeigt Fig. 2 das zentrale Führungsrohr 32, welches über einen Flansch 30 an einem Getriebegehäuse mittelbar oder unmittelbar befestigt ist. Über Führungsrohr 32 und Flansch 30 ist die vorliegende Betätigungseinrichtung 3 also getriebeseitig abgestützt. Flansch und Führungsrohr sind vorliegend ineinander gesteckt. Zur Verbindung kann abhängig vom jeweiligen Anwendungsfall eine (Press-)Passung, oder eine formschlüssige Verbindung oder eine stoffschlüssige Verbindung vorgesehen sein. Alternativ zu einem zentralen Führungsrohr kann auch ein radial außenliegendes Rohr oder ein zwischen den Zylindereinheiten liegendes Rohr verwendet werden. Der Begriff "Rohr" ist so zu verstehen, dass sowohl kreis(ring)förmige als auch andere rotationssymmetrische oder nicht-rotationssymmetrische Querschnitte umfasst sind. Gerade nicht rotationssymmetrische Querschnitte bieten die Möglichkeit einer Verdrehsicherung der Kolben innerhalb der Zylinder.

Flansch 30 und zentrales Führungsrohr 32 weisen radial innen eine Öffnung auf, durch welche die koaxial und ineinander geschachtelt angeordneten Getriebeeingangswellen hindurchgeführt sind. In Fig. 2 sind die Getriebeeingangswellen nur über den Bereich 33 angedeutet, da diese keinen direkten Bezug zur Funktionsweise der Betätigungseinrichtung aufweisen.

Am zentralen Führungsrohr 32 ist eine Rückwand 31 der Betätigungseinrichtung 3 abgestützt. Dabei weist das zentrale Führungsrohr einen Schulterbereich auf, auf dem die Rückwand aufliegt. Zur Verbindung kann abhängig vom jeweiligen Anwendungsfall eine (Press-)Passung, oder eine formschlüssige Verbindung oder eine stoffschlüssige Verbindung vorgesehen sein. Insbesondere wenn Flansch und Führungsrohr bereits miteinander fest verbunden sind, so könnte auf eine feste Verbindung zwischen Rückwand und Führungsrohr auch verzichtet werden.

Die Rückwand 31 ist gemäß dem vorliegenden Ausführungsbeispiel fest mit dem Führungsrohr 32 verbunden und über Schraubenverbindungen am Flansch 30 angeschraubt. Führungsrohr und Rückwand könnten auch zu einem Bauteil integriert werden, welches beispielsweise in einem Tiefziehvorgang hergestellt werden könnte. Zwischen Führungsrohr/Rückwand (unabhängig ob als separate Bauteile oder als integrales Bauteil) einerseits und Flansch 30 können auch andere Verbindungsmöglichkeiten als Verschraubungen, beispielsweise vernieten, verwendet werden.

An der Rückwand 31 sind das Zylindergehäuse 4 der äußeren Zylindereinheit und das Zylindergehäuse 21 der inneren Zylindereinheit befestigt, wobei die Zylindergehäuse 4, 21 ineinander geschachtelt und koaxial zur Achse 2 angeordnet sind, so dass sich eine innere Zylindereinheit mit dem Zylindergehäuse 21 und eine äußere Zylindereinheit mit dem Zylindergehäuse 4 ergibt.

Vorliegend sind wiederum Schraubverbindungen zwischen Rückwand und Zylindergehäusen vorgesehen, wobei wie oben dargelegt, auch andere Arten der Verbindung möglich sind, beispielsweise Verkleben oder Vernieten oder Verschweißen oder Verlöten.

Auf dem zentralen Führungsrohr 32 ist der Kolben 22 der inneren Zylindereinheit über zwei Abstützstellen 34 längs bewegbar abgestützt.

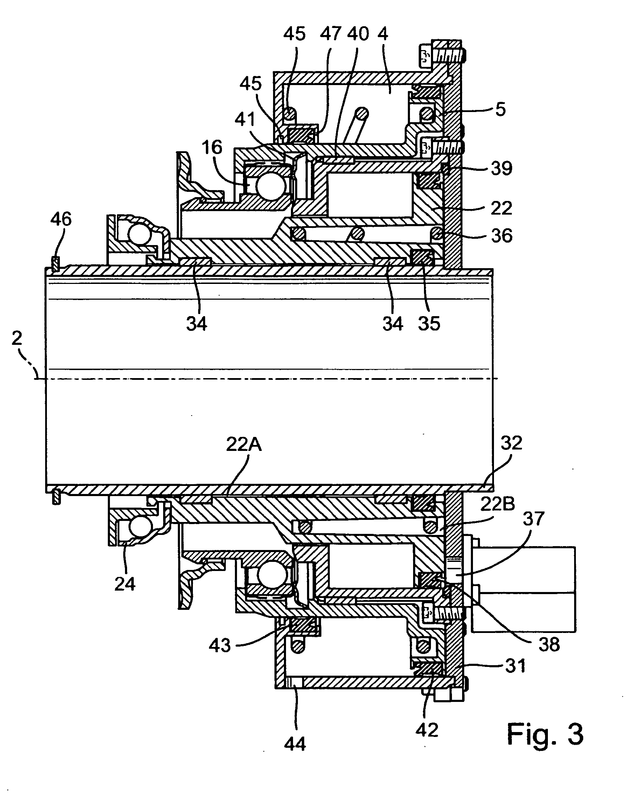

Wie insbesondere auch der vergrößerten Darstellung gemäß Fig. 3 entnehmbar, weist der Kolben 22 in dessen zentraler Öffnung 22A eine radiale Nut auf, in der ein Dichtring 35 aufgenommen ist. Dieser Dichtring 35 ist zur Abdichtung des Spaltes zwischen dem Kolben 22 der inneren Zylindereinheit und dem Führungsrohr 32 gedacht. Der Kolben umfasst weiterhin eine in Axialrichtung verlaufende Ausnehmung 22B, in der eine Vorlastfeder 36 aufgenommen ist. Diese Vorlastfeder stützt sich in der Ausnehmung 22B und an der Rückwand 31 ab, so dass der Kolben 22 in Richtung auf das Betätigungslager 24 vorbelastet wird. Über diese Vorbelastung wird das Betätigungslager 24 gegen die Tellerfeder der Kupplung K2 gedrückt. Außerdem sind die Enden der Vorlastfeder derart angeordnet, dass auf einfache Weise eine Verdrehsicherung gebildet ist.

In Fig. 3 ist der Kolben 22B in seiner hinteren Endlage dargestellt. In Fig. 2 ist der Kolben um einen gewissen Weg in axialer Richtung auf die Antriebseinheit hin verlagert. Diese axiale Verlagerung ergibt sich durch die Wirkung eines Druckmediums, welches über eine Anschluss 37 in der Rückwand 31 der zwischen Gehäuse 21, Kolben 22 und Rückwand 31 gebildeten Druckkammer zugeführt wird. Diese Druckkammer wird über den Dichtring 35 gegenüber dem Führungsrohr und über den weiteren Dichtring 38 gegenüber dem Zylindergehäuse abgedichtet. Zwischen Zylindergehäuse 21 und Rückwand ist eine weitere Dichtung über den Dichtring 39 eingeklemmt, um auch die Verbindungsstelle zwischen Zylindergehäuse 21 und Rückwand 31 abzudichten.

Das Zylindergehäuse der inneren Zylindereinheit umfasst einen in Axialrichtung ausgerichteten zylindrischen Bereich. Auf der äußeren Mantelfläche dieses zylindrischen Bereiches ist eine Führung 40 angeordnet. An dieser, vorliegend ballig ausgeführten, Führung 40 ist der Bewegungskolben 5 der äußeren Zylindereinheit abgestützt. Damit ergibt sich eine gewisse Verkippbarkeit des Kolbens der äußeren Zylindereinheit. Eine ballige Ausbildung ist insbesondere deshalb vorteilhaft, da der Durchmesser des zylindrischen Bereichs des Zylindergehäuses des inneren Zylinders relativ groß gegen die maximal mögliche Abstützlänge auf diesem zylindrischen Bereich ist (aufgrund des Verhältnisses Durchmesser zur Abstützlänge kann die üblicherweise gewünschte Abstützlänge des 1,2 bis 1,5 - fachen des Durchmessers des zylindrischen Bereiches nicht vorgesehen werden).

Der Bewegungskolben 5 der äußeren Zylindereinheit ist dabei mit dem Betätigungslager 16 verbunden, indem das Betätigungslager 16 über das Federelement 41 mit dessen Außenlaufring gegen den Bewegungskolben 5 vorbelastet ist.

Der Bewegungskolben 5 der äußeren Zylindereinheit bildet mit dem Zylindergehäuse 4 der äußeren Zylindereinheit (d.h. ohne die Rückwand 31) eine Druckkammer für die äußere Zylindereinheit. Diese Druckkammer ist über die Dichtringe 41 und 43 abgedichtet. Der Druckmediumzufluss erfolgt über die Verbindungsstelle 44, welche unmittelbar am Zylindergehäuse 4 ansetzt.

In der Druckkammer der äußeren Zylindereinheit ist eine Vorlastfeder 45 aufgenommen. Über diese zwischen Zylindergehäuse 4 und Bewegungskolben 5 der äußeren Zylindereinheit angeordnete Vorlastfeder 45 wird das Betätigungslager 16 in axialer Richtung auf das Getriebe hin vorbelastet, so dass das Betätigungslager 16 in Anlage mit der Tellerfeder der Teilkupplung K1 gedrückt wird.

Im motorseitigen Stirnbereich des Zylindergehäuses 4 der äußeren Zylindereinheit ist eine Abstützstelle 45 angeordnet, an der der Betätigungskolben 5 der äußeren Zylindereinheit zusätzlich zur Abstützstelle 40 abgestützt ist.

Wie dargelegt, sind die Kolben 5 und 22 axial verlagerbar angeordnet. Ein maximaler Bewegungsweg des Bewegungskolbens 22 der inneren Zylindereinheit ist über den Anschlag 46 begrenzt. Ein maximaler Bewegungsweg des Bewegungskolbens 5 der äußeren Zylindereinheit ist über den Anschlag 47 begrenzt.

Die Figuren 1 bis 3 zeigen also eine Doppel-CPCA-Zuordnung mit folgenden Charakteristiken:
(I) Die innere Zylindereinheit für die Kupplung K2, welche als zugedrückte, im Normalzustand offene Kupplung ausgebildet ist:
   Der Kolben 22 wird auf dem Führungsrohr 31 geführt, die Vorlastfeder 36 erzeugt eine Vorlast, um den Kontakt zwischen Hebelfeder der Kupplung K2 mit dem Ausrücklager 24 sicherzustellen und eine Verdrehsicherung (die Enden der Vorlastfeder sind über Anschläge gesichert). Die Luftzufuhr 37 ist an der untersten Stelle des Zylindergehäuses angeordnet.
(II) Die äußere Zylindereinheit für die Kupplung K1, welche als gezogene und im Normalzustand geschlossene Kupplung ausgebildet ist:
   Der Kolben 5 wird auf dem Außendurchmesser des Zylindergehäuses der inneren Zylindereinheit der Teilkupplung K2 geführt, dieses nur an einer Stelle, wobei eine ballige Form dieses Gleitelementes 40 ein Verkippen des Kolbens 5 ermöglicht. Die Vorlastfeder 45 erzeugt eine Vorlast, um eine Verdrehsicherung und eine Anlage zwischen Hebelfeder und Ausrücklager der Teilkupplung K1 sicherzustellen (beide Enden der Vorlastfeder 45 sind über Anschläge gesichert). Die Luftzufuhr 44 ist an der entsprechend untersten Stelle des Zylindergehäuses angebracht.

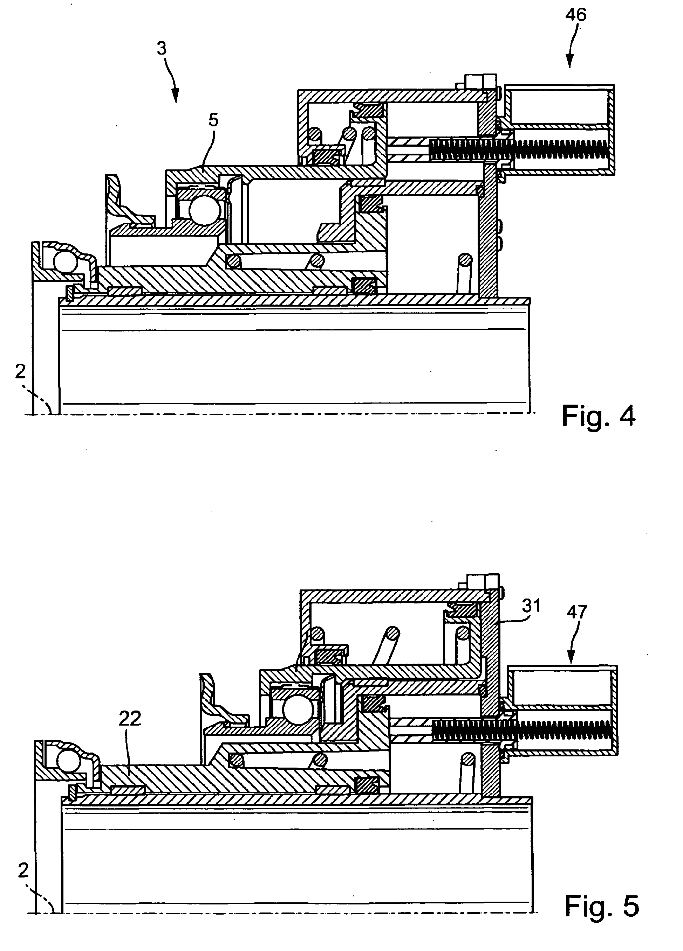

In Fig. 4 ist die Betätigungseinrichtung 3 gemäß den Fig. 1 bis 3 in einem Schnitt dargestellt, in welchem ein Wegsensor für den Kolben 5 der äußeren Zylindereinheit zeigt ist. In Fig. 5 ist eine entsprechende Wegsensoreinheit zur Bestimmung einer Verlagerung des Kolbens 22 dargestellt. Beide Sensoren sind an der Rückwand 31 befestigt, wobei der Verlagerungsweg der Betätigungskolben über einen Stößel detektiert wird, welcher mittels einer Druckfeder an dem jeweiligen Betätigungskolben anliegt.

Alternativ können die Wegsensoren auch als PLCD (Permanent Magnet Linear Contactless Displacementsensor) oder mit Halleffekt ausgelegt werden.

Die vorliegende Anordnung des Sensors mit einem Stößel der mittels einer Druckfeder am Kolben anliegt, ermöglicht einen radial kompakten Aufbau des Doppel-CPCA und vereinfacht die Signalübermittlung durch die Möglichkeit ein Kunststoffsensorgehäuse, wie in den Fig. 4 und 5 gezeigt, zu verwenden.

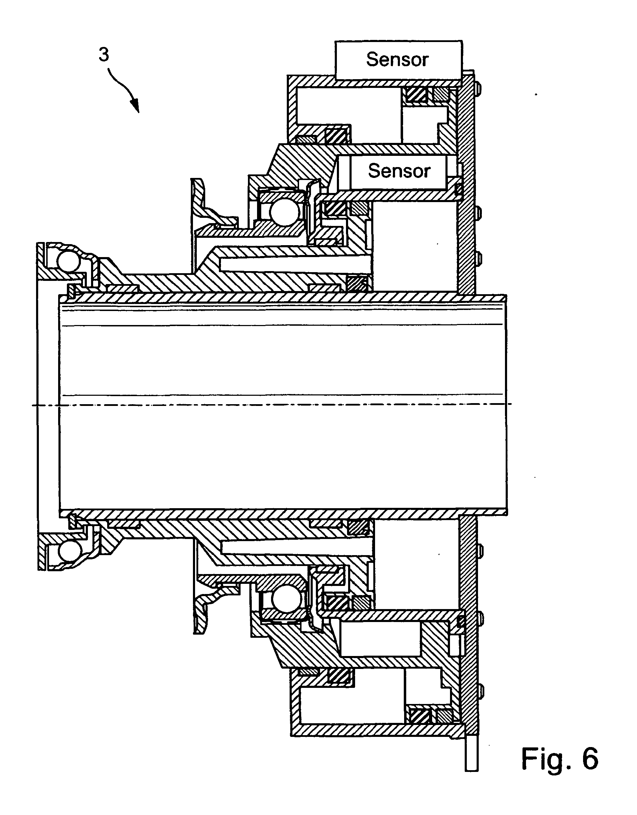

In Fig. 6 ist eine alternative Ausgestaltung der Sensorik für die Betätigungseinrichtung 3 gezeigt, wobei beide Sensoren innerhalb des Doppel-CPCA-Bauraumes integriert sind. Dieses hat als Vorteil, dass die Sensoren keinen weiteren axialen Bauraum benötigen, aber als Nachteil, dass der Doppel-CPCA radial größer ist und damit größere Reibungsverluste verursacht.

Vorliegend wird also ein Doppelbetätigungssystem von der Doppelkupplung vorgeschlagen, welches ein erstes Ausrücklager ziehen kann und ein zweites Ausrücklager drücken kann, wobei der Aufbau sehr kompakt möglich ist und wobei die Sensoren direkt axial mit den Betätigungskolben angeordnet und gesteuert sind.

### Bezugszeichenliste

| | |
|---|---|
| 3 | Betätigungseinrichtung |
| 4 | Zylindergehäuse |
| 5 | Bewegungskolben |
| 16 | Betätigungslager |
| 21 | Zylindergehäuse |
| 22 | Kolben |
| 22A | zentrale Öffnung |
| 22B | verlaufende Ausnehmung |
| 24 | Betätigungslager |
| 30 | Flansch |
| 31 | Rückwand |
| 32 | Führungsrohr |
| 33 | Bereich |
| 34 | Abstützstelle |
| 35 | Dichtring |
| 36 | Vorlastfeder |
| 37 | Anschluss |
| 38 | Dichtring |
| 39 | Dichtring |
| 40 | Führung |
| 41 | Dichtring |
| 43 | Dichtring |
| 44 | Verbindungsstelle |
| 45 | Abstützstelle |
| | |
| K1 | Teilkupplung |
| K2 | Teilkupplung |

## Patentansprüche

1. Betätigungseinrichtung (3) für eine Doppelkupplung (1), wobei die Doppelkupplung (1) eine erste Teilkupplung (K1) und eine zweite Teilkupplung (K2) umfasst, über die eine Antriebswelle eines Antriebs mit einer ersten bzw. einer zweiten Getriebeeingangswelle eines Doppelkupplungsgetriebes verbindbar ist, wobei die Betätigungseinrichtung (3) eine erste pneumatisch oder hydraulisch betätigbare Zylindereinheit mit Zylindergehäuse (4) und Kolben (5) zum Ziehen eines Betätigungslagers (16) der einen Teilkupplung (K1) aufweist, und wobei die Betätigungseinrichtung (3) eine zweite pneumatisch oder hydraulisch betätigbare Zylindereinheit mit Zylindergehäuse (21) und Kolben (22) zum Drücken eines Betätigungslagers (24) der anderen Teilkupplung (K2) aufweist, **dadurch gekennzeichnet, dass** die beiden Zylindereinheiten ineinandergeschachtelt zu einer Achse (2) der Getriebeeingangswelle bzw. der Getriebeeingangswellen bzw. der Kurbelwelle angeordnet sind, so dass diese bezogen auf die Achse (2) eine innere Zylindereinheit und eine äußere Zylindereinheit bilden, wobei das Zylindergehäuse (21) der inneren Zylindereinheit und das Zylindergehäuse (4) der äußeren Zylindereinheit an einer Rückwand (31) der Betätigungseinrichtung (3) befestigt sind, und dass ein zentrales Führungsrohr (32) vorgesehen ist, wobei der Kolben (22) der inneren Zylindereinheit auf dem zentralen Führungsrohr (32) bewegbar abgestützt ist und die Rückwand (31) am zentralen Führungsrohr (32) abgestützt ist.

2. Betätigungseinrichtung nach Anspruch 1, wobei die eine Zugkraft erzeugende erste Zylindereinheit über das eine Betätigungslager (16) mit einer gezogenen und im Normalzustand geschlossenen Teilkupplung (K1), und die eine Druckkraft erzeugende zweite Zylindereinheit über das andere Betätigungslager (24) mit einer zugedrückten und im Normalzustand offenen Teilkupplung (K2) zusammenwirken.

3. Betätigungseinrichtung nach Anspruch 1 oder 2, wobei die äußere Zylindereinheit als eine Zugkraft erzeugende erste Zylindereinheit und die innere Zylindereinheit als eine Druckkraft erzeugende zweite Zylindereinheit ausgebildet sind.

4. Betätigungseinrichtung nach einem der Ansprüche 1 bis 3, wobei der Kolben (22) der inneren Zylindereinheit auf dem zentralen Führungsrohr (32) über genau zwei Abstützstellen (34) bewegbar abgestützt ist.

5. Betätigungseinrichtung nach einem der Ansprüche 1 bis 4, wobei das zentrale Führungsrohr (32) getriebeseitig abgestützt ist.

6. Betätigungseinrichtung nach einem der Ansprüche 1 bis 5, wobei ein Kolben (5) der äußeren Zylindereinheit auf dem Zylindergehäuse (21) der inneren Zylindereinheit bewegbar abgestützt ist.

7. Betätigungseinrichtung nach einem der Ansprüche 1 bis 6, wobei Rückwand (31) und Führungsrohr (32) integral ausgebildet sind.

8. Betätigungseinrichtung nacheinem der Ansprüche 1 bis 7, wobei zwischen Rückwand (31) und Kolben (22) der inneren Zylindereinheit eine Vorlastfeder (36) für die innere Zylindereinheit angeordnet ist, mit der der Kolben (22) in Richtung eines Betätigungslagers (16, 24) einer der Teilkupplungen (K2) gedrückt wird.

9. Betätigungseinrichtung nach einem der Ansprüche 1 bis 8, wobei eine Druckkammer der inneren Zylindereinheit durch Kolben (22) und Zylindergehäuse (21) der inneren Zylindereinheit und Rückwand (31) gebildet ist.

10. Betätigungseinrichtung nach Anspruch 9, wobei ein Druckmediumanschluss (37) der Druckkammer der inneren Zylindereinheit über die Rückwand (31) erfolgt.

11. Betätigungseinrichtung nach einem der Ansprüche 1 bis 10, wobei eine Druckkammer der äußeren Zylindereinheit ausschließlich durch Kolben (5) und Zylindergehäuse (4) der äußeren Zylindereinheit gebildet ist.

12. Betätigungseinrichtung nach Anspruch 11, wobei eine Vorlastfeder (45) für die äußere Zylindereinheit in der Druckkammer der äußeren Zylindereinheit angeordnet ist.

13. Betätigungseinrichtung nach Anspruch 11 oder 12, wobei ein Druckmediumanschluss der Druckkammer der äußeren Zylindereinheit über das Zylindergehäuse (4) der äußeren Zylindereinheit erfolgt.

14. Betätigungseinrichtung nach einem der Ansprüche 1 bis 13, wobei jede der Zylindereinheiten einen Weg- oder Positionssensor aufweist.

15. Betätigungseinrichtung nach Anspruch 14, wobei die Weg- oder Positionssensoren als Einheiten bestehend aus einem mittels einer Vorlastfeder am jeweiligen Kolben anliegenden Stößel, Hall-Effekt-Sensoren oder PLCD-Sensoren ausgebildet sind.

16. Betätigungseinrichtung nach Anspruch 14 oder 15 wobei die Weg- oder Positionssensoren beider Zylindereinheiten an der Rückwand (31) angeordnet oder in den Bauraum der Betätigungseinrichtung (3) integriert, insbesondere zwischen beiden Zylindern angeordnet, sind.

## Claims

1. Actuating device (3) for a double clutch (1), the double clutch (1) comprising a first component clutch (K1) and a second component clutch (K2), via which a drive shaft of a drive can be connected to a first or a second transmission input shaft of a double clutch transmission, the actuating device (3) having a first pneumatically or hydraulically actuable cylinder unit with a cylinder housing (4) and piston (5) for pulling an actuating bearing (16) of one component clutch (K1), and the actuating device (3) having a second pneumatically or hydraulically actuable cylinder unit with a cylinder housing (21) and piston (22) for pressing an actuating bearing (24) of the other component clutch (K2), **characterized in that** the two cylinder units are arranged such that they are nested inside one another with respect to an axis (2) of the transmission input shaft or the transmission input shafts or the crankshaft, with the result that they form, in relation to the axis (2), an inner cylinder unit and an outer cylinder unit, the cylinder housing (21) of the inner cylinder unit and the cylinder housing (4) of the outer cylinder unit being fastened to a rear wall (31) of the actuating device (3), and **in that** a central guide tube (32) is provided, the piston (22) of the inner cylinder unit being supported movably on the central guide tube (32) and the rear wall (31) being supported on the central guide tube (32).

2. Actuating device according to Claim 1, the first cylinder unit which produces a pulling force interacting via one actuating bearing (16) with a pulled component clutch (K1) which is closed in the normal state, and the second cylinder unit which produces a pressing force interacting via the other actuating bearing (24) with a pressed component clutch (K2) which is open in the normal state.

3. Actuating device according to Claim 1 or 2, the outer cylinder unit being configured as a first cylinder unit which produces a pulling force and the inner cylinder unit being configured as a second cylinder unit which produces a pressing force.

4. Actuating device according to one of Claims 1 to 3, the piston (22) of the inner cylinder unit being supported movably on the central guide tube (32) via precisely two supporting points (34).

5. Actuating device according to one of Claims 1 to 4, the central guide tube (32) being supported on the transmission side.

6. Actuating device according to one of Claims 1 to 5, a piston (5) of the outer cylinder unit being supported movably on the cylinder housing (21) of the inner cylinder unit.

7. Actuating device according to one of Claims 1 to 6, the rear wall (31) and guide tube (32) being configured integrally.

8. Actuating device according to one of Claims 1 to 7, a preloading spring (36) for the inner cylinder unit being arranged between the rear wall (31) and piston (22) of the inner cylinder unit, by way of which preloading spring (36) the piston (22) is pressed in the direction of an actuating bearing (16, 24) of one of the component clutches (K2).

9. Actuating device according to one of Claims 1 to 8, a pressure chamber of the inner cylinder unit being formed by the piston (22) and cylinder housing (21) of the inner cylinder unit and the rear wall (31).

10. Actuating device according to Claim 9, a pressure-medium connection (37) of the pressure chamber of the inner cylinder unit being effected via the rear wall (31).

11. Actuating device according to one of Claims 1 to 10, a pressure chamber of the outer cylinder unit being formed exclusively by the piston (5) and cylinder housing (4) of the outer cylinder unit.

12. Actuating device according to Claim 11, a preloading spring (45) for the outer cylinder unit being arranged in the pressure chamber of the outer cylinder unit.

13. Actuating device according to Claim 11 or 12, a pressure-medium connection of the pressure chamber of the outer cylinder unit being effected via the cylinder housing (4) of the outer cylinder unit.

14. Actuating device according to one of Claims 1 to 13, each of the cylinder units having a displacement or position sensor.

15. Actuating device according to Claim 14, the displacement or position sensors being configured as units comprising a tappet which bears against the respective piston by means of a preloading spring, Hall effect sensors or PLCD sensors.

16. Actuating device according to Claim 14 or 15, the displacement or position sensors of both cylinder units being arranged on the rear wall (31) or being integrated into the installation space of the actuating device (3), in particular being arranged between both cylinders.

## Revendications

1. Dispositif d'actionnement (3) pour un double embrayage (1), le double embrayage (1) comprenant un premier embrayage partiel (K1) et un deuxième embrayage partiel (K2), par le biais desquels un arbre d'entraînement d'un entraînement peut être relié à un premier ou à un deuxième arbre d'entrée de boîte de vitesses d'une boîte de vitesses à double embrayage, le dispositif d'actionnement (3) présentant une première unité de cylindre à commande pneumatique ou hydraulique avec un carter de cylindre (4) et un piston (5) pour tirer un palier d'actionnement (16) de l'un des embrayages partiels (K1), et le dispositif d'actionnement (3) présentant une deuxième unité de cylindre à commande pneumatique ou hydraulique avec un carter de cylindre (21) et un piston (22) pour presser un palier d'actionnement (24) de l'autre embrayage partiel (K2), **caractérisé en ce que** les deux unités de cylindres sont disposées de manière emboîtée l'une dans l'autre par rapport à un axe (2) de l'arbre d'entrée de boîte de vitesses ou des arbres d'entrée de boîte de vitesses ou du vilebrequin, de telle sorte qu'elles forment, par rapport à l'axe (2), une unité de cylindre intérieure et une unité de cylindre extérieure, le carter de cylindre (21) de l'unité de cylindre intérieure et le carter de cylindre (4) de l'unité de cylindre extérieure étant fixés sur une paroi arrière (31) du dispositif d'actionnement (3) et **en ce qu'**un tube de guidage central (32) est prévu, le piston (22) de l'unité de cylindre intérieure étant supporté de manière déplaçable sur le tube de guidage central (32) et la paroi arrière (31) étant supportée sur le tube de guidage central (32).

2. Dispositif d'actionnement selon la revendication 1, dans lequel la première unité de cylindre produisant une force de traction coopère par le biais de l'un des paliers d'actionnement (16) avec un embrayage partiel (K1) tiré et fermé dans l'état normal, et la deuxième unité de cylindre produisant une force de pression coopère par le biais de l'autre palier d'actionnement (24) avec un embrayage partiel (K2) pressé et ouvert dans l'état normal.

3. Dispositif d'actionnement selon la revendication 1 ou 2, dans lequel l'unité de cylindre extérieure est réalisée sous la forme d'une première unité de cylindre produisant une force de traction et l'unité de cylindre intérieure est réalisée sous la forme d'une deuxième unité de cylindre produisant une force de pression.

4. Dispositif d'actionnement selon l'une quelconque des revendications 1 à 3, dans lequel le piston (22) de l'unité de cylindre intérieure est supporté de manière déplaçable sur le tube de guidage central (32) par le biais de précisément deux points d'appui (34).

5. Dispositif d'actionnement selon l'une quelconque des revendications 1 à 4, dans lequel le tube de guidage central (32) est supporté du côté de la boîte de vitesses.

6. Dispositif d'actionnement selon l'une quelconque des revendications 1 à 5, dans lequel un piston (5) de l'unité de cylindre extérieure est supporté de manière déplaçable sur le carter de cylindre (21) de l'unité de cylindre intérieure.

7. Dispositif d'actionnement selon l'une quelconque des revendications 1 à 6, dans lequel la paroi arrière (31) et le tube de guidage (32) sont réalisés d'un seul tenant.

8. Dispositif d'actionnement selon l'une quelconque des revendications 1 à 7, dans lequel, entre la paroi arrière (31) et le piston (22) de l'unité de cylindre intérieure, est disposé un ressort de précontrainte (36) pour l'unité de cylindre intérieure, avec lequel le piston (22) est pressé dans la direction d'un palier d'actionnement (16, 24) de l'un des embrayages partiels (K2).

9. Dispositif d'actionnement selon l'une quelconque des revendications 1 à 8, dans lequel une chambre de pression de l'unité de cylindre intérieure est formée par le piston (22) et le carter de cylindre (21) de l'unité de cylindre intérieure et par la paroi arrière (31).

10. Dispositif d'actionnement selon la revendication 9, dans lequel un raccord de fluide sous pression (37) de la chambre de pression de l'unité de cylindre intérieure est réalisé par le biais de la paroi arrière (31).

11. Dispositif d'actionnement selon l'une quelconque des revendications 1 à 10, dans lequel une chambre de pression de l'unité de cylindre extérieure est formée exclusivement par le piston (5) et le carter de cylindre (4) de l'unité de cylindre extérieure.

12. Dispositif d'actionnement selon la revendication 11, dans lequel un ressort de précontrainte (45) pour l'unité de cylindre extérieure est disposé dans la chambre de pression de l'unité de cylindre extérieure.

13. Dispositif d'actionnement selon la revendication 11 ou 12, dans lequel un raccord de fluide sous pression de la chambre de pression de l'unité de cylindre extérieure est réalisé par le biais du carter de cylindre (4) de l'unité de cylindre extérieure.

14. Dispositif d'actionnement selon l'une quelconque des revendications 1 à 13, dans lequel chacune des unités de cylindres présente un capteur de distance ou de position.

15. Dispositif d'actionnement selon la revendication 14, dans lequel les capteurs de distance ou de position sont réalisés sous forme d'unités constituées d'un poussoir s'appliquant au moyen d'un ressort de précontrainte contre le piston respectif, de capteurs à effet de Hall ou de capteurs PLCD.

16. Dispositif d'actionnement selon la revendication 14 ou 15, dans lequel les capteurs de distance ou de position des deux unités de cylindres sont disposés sur la paroi arrière (31) ou sont intégrés dans l'espace de construction du dispositif d'actionnement (3), en particulier entre les deux cylindres.
